Europäisches Patentamt

European Patent Office

Office européen des brevets

(19)

(11) Veröffentlichungsnummer : **0 449 836 B1**

(12) **EUROPÄISCHE PATENTSCHRIFT**

(45) Veröffentlichungstag der Patentschrift :
**10.02.93 Patentblatt 93/06**

(51) Int. Cl.$^5$ : **G01P 9/04**

(21) Anmeldenummer : **89910065.5**

(22) Anmeldetag : **16.09.89**

(86) Internationale Anmeldenummer :
**PCT/DE89/00592**

(87) Internationale Veröffentlichungsnummer :
**WO 90/07124 28.06.90 Gazette 90/15**

(54) **SENSOR ZUR BESTIMMUNG DER WINKELGESCHWINDIGKEIT.**

(30) Priorität : **22.12.88 DE 3843143**

(43) Veröffentlichungstag der Anmeldung :
**09.10.91 Patentblatt 91/41**

(45) Bekanntmachung des Hinweises auf die
Patenterteilung :
**10.02.93 Patentblatt 93/06**

(84) Benannte Vertragsstaaten :
**CH DE FR GB IT LI SE**

(56) Entgegenhaltungen :
**US-A- 3 258 617**
**US-A- 3 520 195**

(73) Patentinhaber : **ROBERT BOSCH GMBH**
**Postfach 30 02 20**
**W-7000 Stuttgart 30 (DE)**

(72) Erfinder : **HAMISCH, Hansjoachim**
**Stendelweg 49**
**W-1000 Berlin 19 (DE)**
Erfinder : **KAISER, Hans-Jürgen**
**Morgensternstr. 8**
**W-1000 Berlin 45 (DE)**
Erfinder : **BORUSCHEWITZ, Manfred**
**Mühlenhoffstr. 6**
**W-1000 Berlin 61 (DE)**

**Beschreibung**

Stand der Technik

Die Erfindung betrifft einen Sensor zur Bestimmung der Winkelgeschwindigkeit. Bei bekannten Schwingungsgyrometern wird im allgemeinen mit niederfrequenten Biegeschwingern, z.B Stabschwingern, Zylinderschwingern oder Stimmgabelschwingern gearbeitet. Bei Gyrometern mit Stabschwingern und Zylinderschwingern werden verhältnismäßig kleine piezokeramische Elemente auf größeren, nicht piezoelektrischen Schwingkörpern befestigt. Diese bewirken die Schwingungsanregung, dienen als Sensor für die Amplitudenregelung und wandeln die Wirkungen der Corioliskraft auf den Schwingkörper in das Meßsignal um. Da für jede einzelne Funktion ein Element bzw, ein Elementenpaar erforderlich ist, ist der Aufbau dieser Gyrometer kompliziert, ferner führen die unterschiedlichen Ausdehnungskoeffizienten des Schwingkörpers und der piezokeramischen Elemente zu thermisch bedingten mechanischen Spannungen, die verhältnismäßig große Temperaturabhängigkeiten des Meßsignals zur folge haben.

Bei Gyrometern mit Stimmgabelschwingern wird ein piezoelektrischer Schwingkörper verwendet, auf dem keine zusätzlichen Anregungselemente befestigt werden müssen. Mit den Corioliskraftwirkungen werden jedoch die angekoppelten Biegeschwinger ebenfalls zur Resonanz angeregt, woraus sich auch bei diesem Gyrometer für das Meßsignal starke Temperaturabhängigkeiten ergeben.

Die verwendeten Schwingungsfrequenzen sind bei allen genannten Gyrometern relativ niedrig und liegen im Bereich der Frequenzen von Erschütterungen oder nur wenig davon entfernt, so daß die gewonnenen Meßsignale durch diese Störsignale relativ stark verfälscht werden.

In der US-A-3 258 617 wird allgemein auf piezoelektrische Sensoren hingewiesen, die prismatische Gestalt haben und aus einem monolithischen Block bestehen oder Schichtartig aus mehreren Teilen aufgebaut sind. Auf den Oberflächen des Blocks bzw. der Teile sind Elektroden angeordnet, mit deren Hilfe der Sensor zu Schwingungen, insbesondere zu Scherschwingungen in einer ersten Richtung angeregt wird und mit deren Hilfe die bei Rotation um eine Achse parallel zu einer zweiten Richtung durch Schwingungen in einer dritten Richtung erzeugte Energie abgegriffen wird. Es fehlen aber Hinweise auf den konkreten Patentgegenstand der vorliegenden Erfindung. Bei dieser ergeben sich insbesondere durch die Verwendung von piezokeramischen Dickenscherschwingern wesentliche Unterschiede in der Konstruktion (z.B. Anregung in Richtung der polaren Achse) und im zugrundeliegenden physikalischen Prinzip.

Vorteile der Erfindung

Der erfindungsgemäße Sensor zur Bestimmung der Winkelgeschwindigkeit mit den Merkmalen des Anspruchs 1 hat demgegenüber den Vorteil, daß aufgrund der Verwendung eines piezokeramischen Schwingkörpers für die Meßsignalbildung keine zusätzlichen Schwinger angekoppelt sind. Er hat dadurch einen sehr einfachen, aber mechanisch stabilen Aufbau. Das Fehlen von zusätzlichen Elementen auf dem Schwingkörper verbessert das Verhalten bei Temperaturänderungen. Der Sensor weist ferner eine relativ geringe Erschütterungsempfindlichkeit auf. Dazu trägt einmal der mit der Ausbildung als Dickenscherschwinger erreichte große Frequenzabstand zwischen der Signalfrequenz und den Störfrequenzen von Erschütterungen bei, der eine effektive Siebung mittels Hochpaß im Signalweg ermöglicht. Dies wird unterstützt durch eine weitgehende Kompensation der erschütterungsbedingten Störladungen bei Parallelschaltung zweier Sensoren mit entgegengesetzter Orientierung ihrer polaren z-Achsen, wie sie in Figur 5 dargestellt sind. Gleichzeitig wird wegen der Addition der Nutzsignale eine höhere Meßempfindlichkeit erreicht.

Durch die in den abhängigen Ansprüchen aufgeführten Maßnahmen sind vorteilhafte Weiterbildungen des im Anspruch 1 angegebenen Sensors möglich.

Zeichnung

Ausführungsbeispiele der Erfindung sind in der Zeichnung dargestellt und in der nachfolgenden Beschreibung näher erläutert. Es zeigen die Figur 1 und 2 eine schematische Darstellung des Meßprinzips, die Figuren 3 bis 6 je ein Ausführungsbeispiel und die Figur 7 den elektrischen Anschluß des Sensors an eine Anregungsspannung.

Beschreibung der Ausführungsbeispiele

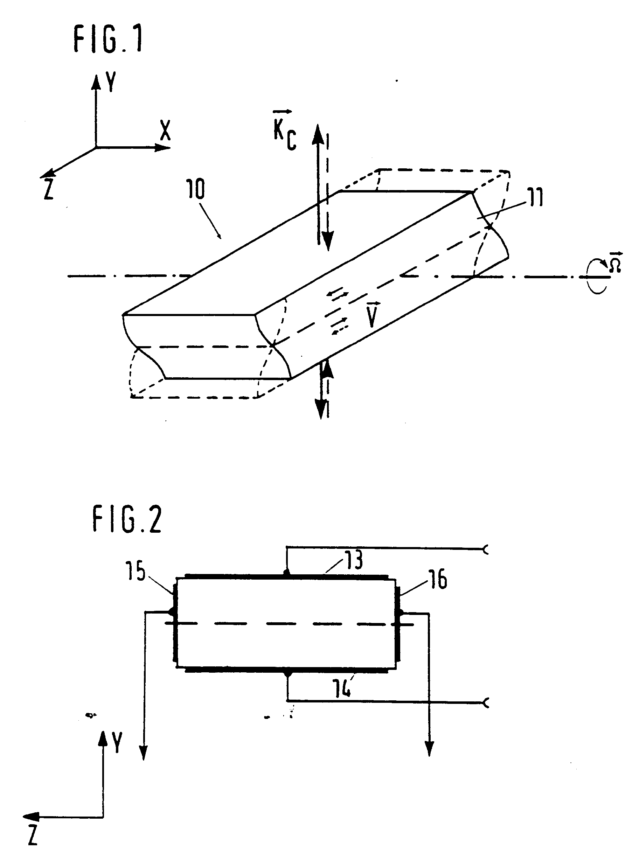

In den Figuren 1 und 2 ist schematisch das Meßprinzip des Sensors 10 dargestellt, der in der einfachsten Form aus einer piezokeramischen Platte 11 besteht. Entsprechend dem in der Figur 1 eingezeichneten Koordinatenkreuz ist der Sensor 10 in z-Richtung, die definitionsgemäß die Richtung der polaren Achse darstellt, deutlich größer als in den beiden anderen (x-, y-)Richtungen. Die Schwingungsanregung wird über die in der Figur 2 eingezeichneten Elektroden 13, 14 auf den y-Flächen bewirkt, über die der Sensor 10 frequenzbestimmendes Element einer Oszillatorschaltung wird. In bekannter Weise ist die Lage einer Ebene durch ihre Normalenrichtung ausgedrückt. Die Anregungsmöglichkeit des Sensors 10 ergibt sich aus den piezoelektrischen Eigenschaften der Keramikplatte 11, in der durch ein elektrisches Wechselfeld $E_y$

entsprechend der Gleichung $y_z = d_{15} \cdot E_y$ periodische Scherungen $y_z$ der Platte 11 erzeugt werden. Die Proportionalitätsfaktoren $d_{15}$ sowie $d_{31}, \ldots$ in den Beziehungen zwischen elektrischen und mechanischen Größen werden als piezoelektrische Koeffizienten bezeichnet.

Die Messung der Winkelgeschwindigkeit $\vec{\Omega}$ beruht auf der Corioliskraft $\vec{K}_c$, die eine im rotierenden System mit der Geschwindigkeit $\vec{v}$ bewegte Masse m erfährt,

$$\vec{K}_c = 2mv \times \vec{\Omega} \, .$$

Der Betrag der Corioliskraft $\vec{K}_c$ ist dem Betrag der Winkelgeschwindigkeit $\vec{\Omega}$ proportional, ihre durch das Vektorprodukt

$$\vec{v} \times \vec{\Omega}$$

bestimmte Richtung wechselt mit dem Drehsinn der Winkelgeschwindigkeit $\vec{\Omega}$ das Vorzeichen. Die Entfernung zur Drehachse spielt dabei keine Rolle. Für die Massenelemente m des Sensors 10 ist die Geschwindigkeit durch die durch das elektrische Wechselfeld $E_y$ hervorgerufene Schwingbewegung gegeben, so daß der Geschwindigkeitsvektor $\vec{v}$, wie er in der Figur 1 eingezeichnet ist, parallel zur z-Achse verläuft. Die Größe des Geschwindigkeitsvektors $\vec{v}$ ist in der Knotenebene der Platte 11 gleich Null und seine Richtung wechselt dort das Vorzeichen. Die Phase der zum Geschwindigkeitsvektor $\vec{v}$ periodischen Corioliskräfte $\vec{K}_c$ ist gegenüber der Phase der Schwingungsamplitude um $\pi/2$ verschoben.

Die Geschwindigkeitsamplitude, die durch das Produkt aus Schwingungsamplitude und Schwingungsfrequenz bestimmt ist, kann auch bei Scherschwingungen mit sehr kleinen Amplituden in der Größenordnung Mikrometer ausreichende Werte annehmen, da die Frequenz entsprechend groß gemacht werden kann. Bei Verwendung einer hohen Schwingungsfrequenz, z.B. 160 kHz, wobei die Schwingungsfrequenz gleichzeitig auch Signalfrequenz ist, wird der Frequenzabstand zu Störsignalen, die sich aus Erschütterungen ergeben, sehr viel größer als bei bekannten Verfahren. Infolge der damit möglichen Reduzierung der Störsignale durch einen Hochpaß ergibt sich eine geringere Erschütterungsempfindlichkeit.

Die Orientierung der z-Achse zum zu messenden Winkelgeschwindigkeitsvektor $\vec{\Omega}$ ist dabei so zu wählen, daß die durch die Corioliskräfte $\vec{K}_c$ entstandenen periodischen mechanischen Spannungen auf den z-flächen infolge der piezoelektrischen Eigenschaften periodisch Ladungen erzeugen. Diese Ladungen stellen dann ein Maß für die Winkelgeschwindigkeit dar.

Dazu muß der Winkelgeschwindigkeitsvektor $\vec{\Omega}$ parallel zur x-Achse orientiert sein. Die Corioliskräfte $\vec{K}_c$ wirken dann parallel zur y-Achse und erzeugen Normalspannungskomponenten $Y_y$, die dann entsprechend $D_z = d_{31} \cdot Y_y$ ($D_z$ ist die dielektrische Verschiebung mit der Dimension einer Flächenladungsdichte), die zur Winkelgeschwindigkeit $\vec{\Omega}$ proportionalen Ladungen auf den z-Elektroden erzeugen. Hat der Vektor eine andere Lage zum Sensor 10, so wird nur seine x-Komponente wirksam, denn die y-Komponente der Winkelgeschwindigkeit $\vec{\Omega}$ erzeugt nur Scherspannungen $X_y$, die keine Ladungen hervorrufen. Ferner erzeugen die Komponenten des Winkelgeschwindigkeitsvektors $\vec{\Omega}$ überhaupt keine Corioliskräfte, da der Winkelgeschwindigkeitsvektor $\vec{\Omega}_z$ parallel zur Bewegung $\vec{v}$ der schwingenden Massen orientiert ist. Soll z.B. bei der Kurvenfahrt eines Kraftfahrzeuges die Winkelgeschwindigkeit um dessen vertikale Achse gemessen werden, muß die x-Achse des Sensors 10 parallel zu dieser Achse verlaufen.

Die Verwendung von piezokeramischen Material ist notwendig, um ausreichend hohe $d_{31}$-Werte zu erhalten. Die Empfindlichkeit kann zwar durch Vergrößerung des Plattenvolumens vergrößert werden. Dem sind aber durch die Anwendungsbedingungen enge Grenzen gesetzt.

Aus dem gefilterten und verstärkten Signal an den Signalelektroden 15, 16 des Sensors 10 wird das zur Winkelgeschwindigkeit $\vec{\Omega}$ proportionale Ausgangssignal durch phasenempfindliche Gleichrichtung erhalten. Da die Phasenlage der periodischen Aufladung der z-Elektroden sich bei Umkehr der Drehrichtung um 180° ändert, gibt das Vorzeichen der Gleichspannung den Drehsinn an.

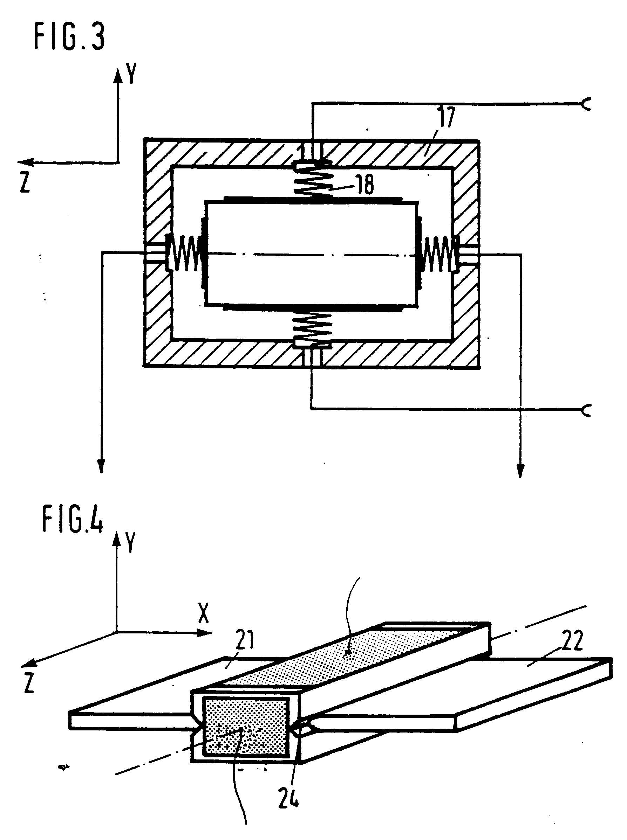

In der Figur 3 ist ein konstruktives Ausführungsbeispiel des Sensors 10 dargestellt. Der Sensor 10 ist hier in einem Rahmen 17 mit Hilfe von Kontaktfedern 18 eingehängt. Die Kontaktfedern 18 dienen sowohl zur elastischen Aufhängung des Sensors 10 im Rahmen 17 als auch zur Übertragung des elektrischen Meßsignals bzw. des elektrischen Anregungssignals zu den entsprechenden Elektroden des Sensors 10. Soll die Winkelgeschwindigkeit einer Drehung um eine vertikale Achse gemessen werden, so ist der Rahmen 17 des Sensors 10 horizontal im gedrehten Gesamtsystem einzubauen. Als Kontaktfedern 18 eignet sich jeder Federkörper, der die Scherschwingungen des Sensors 10 nicht wesentlich behindert und der durch eigene Leitfähigkeit, Metallisierung oder in Kombination mit dünnen Drähten die elektrische Kontaktierung gleichzeitig übernimmt. Mit dieser weichen Halterung wird eine gewisse Erschütterungsisolation erreicht, die unter Umständen eine federnde Abstützung der x-Fläche erfordern kann, die ferner durch eine Schwingungsisolation des Rahmens unterstützt werden kann. Je weicher jedoch die Aufhängung des Sensors 10 ist, umso geringer wird die zeitliche Auflösung der Winkelgeschwindigkeitsmessung.

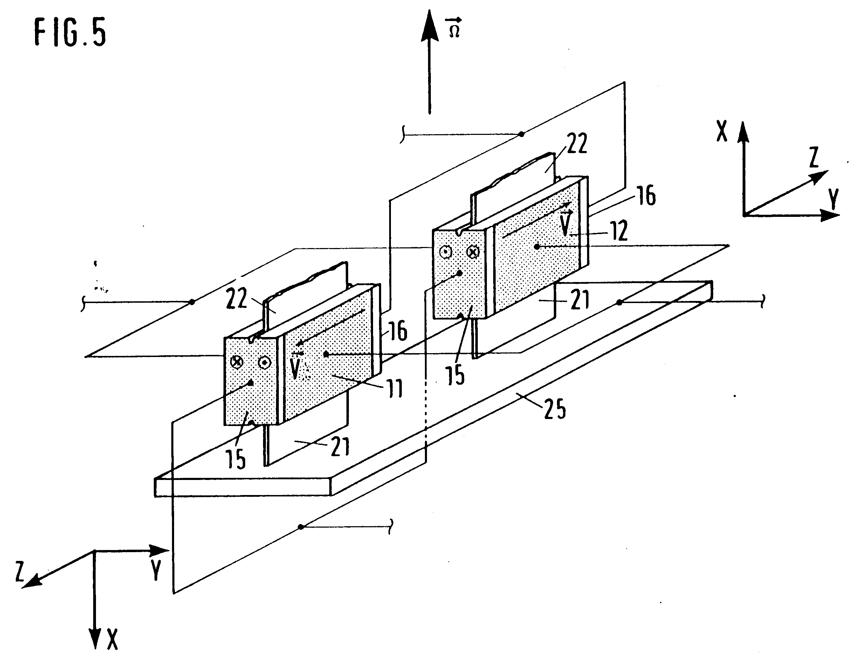

Eine höhere zeitliche Auflösung des Meßsignals wird mit dem in der Figur 4 dargestellten Ausführungsbeispiel erreicht, in dem der Sensor 10 mit Hilfe zweier Andruckplatten 21, 22 gehalten wird. Hierzu sind in der Knotenlinie des Sensors 10, in den x-Flächen in z-Richtung verlaufend, zwei Längsnuten 24 ausgebildet, in die die Schneiden der Andruckplatten 21, 22 eingesetzt sind. Es ist aber auch denkbar, die Andruckplatten 21, 22 ohne ausgebildete Längsnuten an den x-Flächen des Sensors 10 anzusetzen.

Ist im Fall der relativ harten Halterung mit Hilfe des Rahmens 17 nach der Figur 3 die Unterdrückung des Einflusses von erschütterungsbedingten Störspannungen durch die oben erwähnte Siebung der niederfrequenten Signalanteile durch Hochpaßfilter nicht ausreichend, so kann, wie in Figur 5 dargestellt, durch die Kombination von zwei Sensoren 10, d.h. von zwei Sensorplatten 11, 12 das Auftreten von Störladungen bereits auf den Signalelektroden 15, 16 durch Kompensation weitgehend reduziert werden. Niederfrequente Schwingungen am Befestigungsort des Sensors 10 können z.B. durch die Unebenheit der Straße oder durch die Schwingungen des Motors verursacht werden. Bei der Übertragung der Erschütterungsbewegungen auf die Sensorplatte 11 entsteht in dieser eine Trägheitskraft, die zu mechanischen Spannungen führt. Die dabei entstehenden Scherspannungen erzeugen keine Ladungen auf den Signalelektroden der z-Flächen, jedoch werden von allen Normalspannungskomponenten $X_x$, $Y_y$, $Z_z$ Ladungen erzeugt. Die Größe der dadurch erzeugten Ladungen kann bei der einzelnen Platte sehr viel größer sein als das Meßsignal an der geforderten Nachweisgrenze. Wirken jedoch auf die zwei Sensorplatten 11, 12 mit parallel liegenden z-Achsen. wie sie in der Figur 5 dargestellt sind, durch die Halterung 25 praktisch die gleichen mechanischen Scherspannungen infolge der auftretenden Erschütterungen ein. so werden die von diesen erzeugten Störladungen auf den Signalelektroden 15, 16 beider Platten 11, 12 gleich groß. Beim Zusammenschalten von je zwei Elektroden. auf denen die Störladungen entgegengesetztes Vorzeichen haben, kommt es dann zu der gewünschten Störladungskompensation. Gleichzeitig addieren sich auch die Signale, wenn die Schwingen der beiden Platten 11, 12 gegenphasig angeregt werden, wie im Ausführungsbeispiel nach Figur 5 dargestellt ist. Dabei entstehen in einer Sensorplatte 11 Druckspannungen, während in der anderen Zugspannungen hervorgerufen werden bzw, umgekehrt. Dies gilt in allen Orientierungen für alle Kraftarten, die infolge von linearen Schwingungen und Drehschwingungen entstehen, d.h. für Beschleunigungs-, Zentrifugal- und Corioliskräfte.

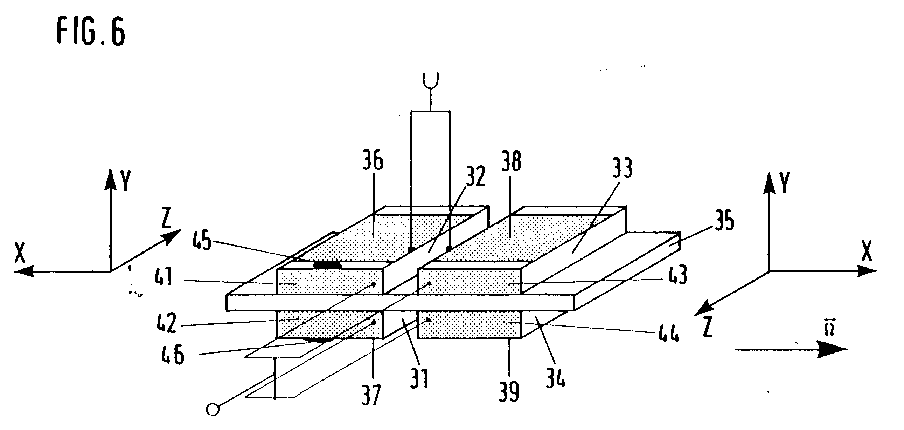

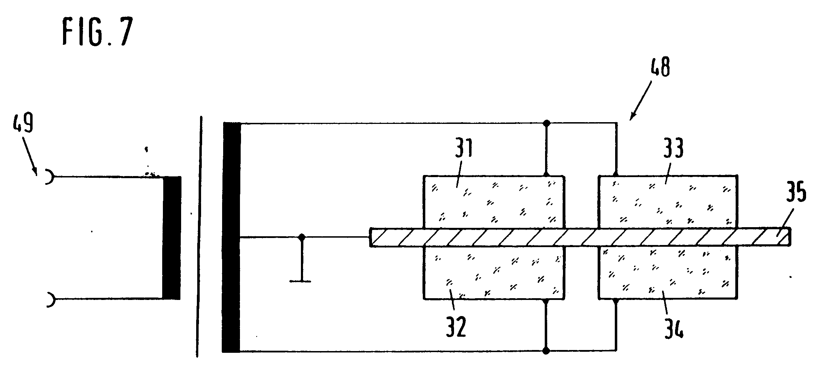

Eine Erhöhung des Ausgangssignals und eine Kompensation von Störeinflüssen ist auch mit Hilfe einer Anordnung nach Figur 6 möglich, die weitgehend der nach Figur 5 entspricht. Hier werden statt der λ/2-Schwinger vier piezoelektrische Platten 31 bis 34 verwendet, die mit einer Unterlage 35 fest verbunden sind. Die Platten 31 bis 34 stellen deshalb λ/4-Schwinger dar. Dadurch entsteht eine sehr kompakte und stabile Anordnung. Die Platten 31 bis 34 können z.B. auf eine Metallplatte aufgelötet oder auf eine Keramikunterlage mit Hilfe eines Leitklebers aufgeklebt sein. Die Metallplatte bzw. der Leitkleber dienen dabei als eine der Elektroden 13 bzw. 14 zur Anregung. Die z-Achse der Platten 31 bis 34, d.h. deren polare Achsen liegen in der Ebene der Unterlage 35. Ihre Richtung ist In den Plattenpaaren 31, 32 bzw. 33, 34 jeweils gleich, was in der Figur 6 durch zugeordnete Koordinatensysteme dargestellt ist. Die Scherbewegung der Platten 31 bis 34 ist jeweils über Kreuz in gleicher Phase. Mit dieser Schwingungsverteilung wird eine Bewegung des Schwerpunktes des Systems aus Platten 31 bis 34 und der Unterlage 35 und damit die Einkopplung von Transversalbewegungen in die Unterlage 35 vermieden. Außerdem findet in der Unterlage 35 eine weitgehende Kompensation der mit den Scherbewegungen verbundenen Drehmomente statt. Damit bei der vorgegebenen Lage der z-Achsen die Anregung der Dicenscherschwingungen in der gewünschten gegenphasigen Lage möglich ist, sind die y-Elektroden 36 bis 39 der Sensorplatten 31 bis 34, wie in Figur 7 dargestellt, mit einem Übertrager 49 an die Spannungsquelle anzuschließen. Die auf den z-Elektroden einer Seite, z.B. 41 bis 44, in Figur 6 durch die Drehung des Sensors um die x-Achse erzeugten Ladungen haben gleiches Vorzeichen, so daß die vier z-Elektroden jeder Seite, wie auch für die z-Elektroden 41 bis 44 dargestellt, zusammengeschaltet werden können. Wie beim Sensor 10 nach der Figur 5, werden dann auch hier die niederfrequenten Störungen weitgehend kompensiert, während sich die Nutzsignale addieren.

Bei allen obengenannten Sensorversionen (Figuren 3 bis 6) treten bereits ohne Drehung des Sensors am Signalausgang Störspannungen mit Anregungsfrequenz auf, die, obgleich sie nicht mit dem Signal In Phase sind, so gut wie möglich kompensiert werden müssen. Sie sind zum Teil durch unvermeidliche Kapazitäten zwischen den Anregungselektroden und den Zuleitungen und den Signalelektroden bedingt. Überlagert sind Störsignale, die von piezoelektrischen Sekundäreffekten der Streufelder zwischen den Anregungs- und Signalelektroden herrühren. Für die Kompensation wird aus der Anregungsspannung eine Teilspannung geeigneter Größe und Phasenlage gebildet, die am Signalausgang der Sensorplatten überlagert wird. Ferner tritt bei Sensoren mit freischwingenden Platten (Figur 3 bis 5), also bei $\lambda/2$-Schwingern, ein Oberwellensignal auf. Es ergibt sich aus den y-Komponenten der Plattenschwingungen, die sich an den Enden der Platte infolge der Spannungsfreiheit an den Oberflächen senkrecht zur z-Ebene ausbilden. Um die Schaltung der phasenempfindlichen Gleichrichtung nicht mit dem Oberwellensignal zu übersteuern, ist dieses im Signalweg durch einen Tiefpaß hinreichend zu unterdrücken.

Da, wie oben ausgeführt, die Größe des Meßsignals von der Schwingungsamplitude der Sensoren 10 abhängig ist, muß diese konstant gehalten werden. Dies ist über längeren Zeitraum am zuverlässigsten über eine Messung der Schwingungsamplitude möglich. Bei den Sensoren mit freischwingenden Platten ist das oben erwähnte Oberwellensignal eindeutig von der Schwingungsamplitude abhängig und damit für die Regelung geeignet. Die Aregungsspannung wird dabei so geregelt, daß ein vorgegebener Wert des Oberwellensignals konstant gehalten wird. Für diesen Zweck ist ein Oberwellensignal vor der Filterung im Signalweg abzuzweigen. Die Verwendung des Oberwellensignals hat den Vorteil, daß für die Messung der Schwingungsamplitude keine zusätzlichen Sensoren bzw. Elektroden erforderlich sind, und daß eine Verfälschung des Regelsignals durch Streuung der weit größeren Anregungsspannung wegen der Filtermöglichkeit praktisch ausgeschlossen wird. Bei einem Sensor nach der Figur 6 sind für die Schwingungsamplitudenmessung neben den Anregungselektroden 36, 37 auf den y-Flächen zusätzliche kleine Elektroden 45, 46 aufzubringen.

**Patentansprüche**

1. Sensor (10) zur Bestimmung der Winkelgeschwindigkeit $(\vec{\Omega})$, insbesondere von Kraftfahrzeugen, der mit mindestens einem piezokeramischen Element (11) nach Art eines Schwingungsgyrometers arbeitet, wobei das Element als Dickenscherschwinger ausgebildet ist und Plattenform hat, wobei die polare Achse parallel zur Plattenebene und senkrecht auf die Seitenflächen des Elements (11) ausgerichtet ist und wobei sich auf den Plattenflächen des Elements (11) die Anregungselektroden (13, 14) befinden und auf den zur polaren Achse senkrechten Flächen des Elements (11) Meßelektroden (15, 16) angeordnet sind, die zur Messung der zur Winkelgeschwindigkeit $(\vec{\Omega})$ proportionalen Ladung des piezokeramischen Elements (11) dienen, wobei die Scherschwingung in Richtung der polaren Achse angeregt wird und wobei bei Rotation um eine Drehachse, die senkrecht zur polaren Achse des piezokeramischen Elements (11) und parallel zur Ebene des Elements (11) ist, auf den Sensor (10) einwirkende Corioliskräfte $K_c$ erzeugt werden, die auf den Flächen senkrecht zur polaren Achse des bzw. der Elemente (11) Ladungen hervorrufen die ein Maß für die Winkelgeschwindigkeit $(\vec{\Omega})$ der Rotation sind.

2. Sensor nach Anspruch 1, dadurch gekennzeichnet, daß an dem Sensor (10) im Bereich der Knotenlinie (24) des bzw. der Elemente (11) zwei Halterungen (21, 22) angebracht sind.

3. Sensor nach Anspruch 2, dadurch gekennzeichnet, daß im Bereich der Knotenlinie des Sensors (10) eine Längsnut (24) am Sensor (10) ausgebildet ist, in die die Halterungen (21, 22) eingreifen.

4. Sensor nach Anspruch 1 und/oder 2, dadurch gekennzeichnet, daß der Sensor (10) in einem Rahmen (17) mit Hilfe von elastischen, elektrisch leitenden Kontaktfedern (18) angeordnet ist.

5. Sensor nach einem der Ansprüche 1 bis 4, dadurch gekennzeichnet, polare Achsen parallel ausgerichtet sind und die gegenphasig zu Schwingungen angeregt werden, und daß je zwei Meßelektroden (15, 16) so miteinander verschaltet sind, daß sich die Meßsignale addieren, während sich die erschütterungsbedingten Störladungen kompensieren.

6. Sensor nach einem der Ansprüche 1 bis 5, dadurch gekennzeichnet, daß aus einer Unterlage (35) mindestens zwei Sensoren mit je zwei Plattenpaaren (31, 32 bzw. 33, 34) angeordnet sind, deren polare Achsen innerhalb der Paare gleichgerichtet sind und deren Scherbewegungen in den Plattenpaaren gegenphasig und über Kreuz gleichphasig angeregt werden.

7. Sensor nach einem der Ansprüche 1 bis 5, dadurch gekennzeichnet, daß ein an den Meßelektroden (15, 16) des Sensors (10) auftretendes, von der Größe der Schwingungsamplitude abhängiges Oberwellensignal vor der Filterung im Signalweg abgezweigt und für die Regelung der Schwingungsamplitude benutzt wird.

## Claims

1. Sensor (10) for determining angular velocity ($\Omega$), in particular of motor vehicles, which operates with at least one piezoceramic component (11) of the type of an oscillation gyrometer, the component being constructed as a thickness shear oscillator and having the shape of a plate, the polar axis being aligned parallel to the plane of the plate and perpendicular to the side faces of the component (11), and the exciting electrodes (13, 14) being located on the plate surfaces of the component (11) and measuring electrodes (15, 16), which serve to measure the charge of the piezoceramic component (11), which charge is proportional to the angular velocity ($\Omega$), being arranged on the surfaces of the component (11) which are perpendicular to the polar axis, the shear oscillation being excited in the direction of the polar axis, and in the case of rotation about an axis of rotation which is perpendicular to the polar axis of the piezoceramic component (11) and parallel to the plane of the component (11) there being produced Coriolis forces $K_c$ affecting the sensor (10), which produce charges on the surfaces perpendicular to the polar axis of the component or components (11), which charges are a measure of the angular velocity ($\Omega$) of the rotation.

2. Sensor according to Claim 1, characterised in that two mountings (21, 22) are attached to the sensor (10) in the region of the nodal line (24) of the component or components (11).

3. Sensor according to one of Claim 2, characterised in that a longitudinal groove (24), in which the mountings (21, 22) engage, is constructed on the sensor (10) in the region of the nodal line of the sensor (10).

4. Sensor according to Claims 1 and/or 2, characterised in that the sensor (10) is arranged in a frame (17) with the aid of elastic, electrically conductive contact springs ( 18 ).

5. Sensor according to one of Claims 1 to 4, characterised in that the sensor (10) consists of two components (11, 12), whose polar axes are aligned parallel and which are excited in antiphase with the oscillations, and in that two measuring electrodes (15, 16) are connected to one another in such a way that the measuring signals add together, while the interference charges induced by vibration compensate one another.

6. Sensor according to one of Claims 1 to 5, characterised in that at least two sensors each having two pairs of plates (31, 32 or 33, 34) are arranged on a substrate ( 35 ), the polar axes of which are equidirectional inside the pairs, and whose shear motions are excited in antiphase in the pairs of plates and cophasally diagonally.

7. Sensor according to one of Claims 1 to 5, characterised in that a harmonic signal, which occurs at the measuring electrodes (15, 16) of the sensor (10) and is dependent on the magnitude of the amplitude of oscillation, is tapped before filtering in the signal path and is used to control the amplitude of oscillation.

## Revendications

1. Détecteur (10) pour déterminer la vitesse angulaire $(\vec{\Omega})$, en particulier de véhicules à moteurs, qui fonctionne avec au moins un élément piézocéramique (11) à la manière d'un gyromètre d'oscillations, détecteur dans lequel l'élément est constitué comme un oscillateur de cisaillement d'épaisseur et a la forme d'une plaquette, l'axe polaire étant dirigé parallèlement au plan de la plaquette et perpendiculairement aux faces latérales de l'élément (11) et les électrodes d'excitation (13, 14) se trouvant sur les faces de la plaquette de l'élément (11) et des électrodes de mesure (15, 16) étant disposées sur les faces de l'élément (11) perpendiculaires à l'axe polaire, électrodes qui servent à la mesure de la charge proportionnelle à la vitesse angulaire $(\vec{\Omega})$ de l'élément piézo-céramique (11), l'oscillation de cisaillement étant excitée dans le sens de l'axe polaire et lors de la rotation autour d'un axe de rotation, qui est perpendiculaire à l'axe polaire de l'élément piézo-céramique (11), et parallèlement au plan de l'élément (11) des forces de Coriolis $K_c$ agissant sur le détecteur (10) étant produites, forces qui dégagent sur les faces perpendiculaires à l'axe polaire du ou des éléments (11) des charges, qui sont une mesure de la vitesse angulaire $(\vec{\Omega})$ de la rotation.

2. Détecteur selon la revendication 1, caractérisé en ce que deux supports (21, 22) sont disposés sur le détecteur (10) dans la zone de la ligne nodale (24) du ou des éléments (11).

3.  Détecteur selon la revendication 2, caractérisé en ce que dans la zone de la ligne nodale du détecteur (10) est constituée une rainure longitudinale (24) sur le détecteur (10), dans laquelle viennent en prise les supports (21, 22).

4.  Détecteur selon les revendications 1 et/ou 2, caractérisé en ce que le détecteur (10) est disposé dans un cadre (17) à l'aide de ressorts de contact (18) élastiques, conduisant l'électricité,

5.  Détecteur selon l'une des revendications 1 à 4, caractérisé en ce que le détecteur (10) se compose de deux éléments (11, 12), dont les axes polaires sont orientés parallèlement et qui sont excités en opposition de phase aux oscillations et en ce que deux électrodes de mesure (15, 16) sont branchées ensemble de telle façon que les signaux de mesure s'additionnent, tandis que les charges parasites dûes aux vibrations se compensent.

6.  Détecteur selon l'une des revendications 1 à 5, caractérisé en ce qu'au moins deux détecteurs sont disposés sur une embase (35) avec chacun deux paires de plaquettes (31, 32 ou 33, 34), dont les axes polaires sont dirigés de la même façon à l'intérieur des paires et dont les mouvements de cisaillement sont amorcés dans les paires de plaquettes en opposition de phase et en croix en phase.

7.  Détecteur selon l'une des revendications 1 à 5, caractérisé en ce qu'on dévie un signal d'harmoniques se produisant sur les électrodes de mesure (15, 16) du détecteur (10) fonction de la grandeur de l'amplitude d'oscillation avant le filtrage sur le trajet de signal et on l'utilise pour la régulation de l'amplitude d'oscillation.

FIG.1

FIG.2

## FIG.3

## FIG.4

FIG.5

EP 0 449 836 B1

FIG.6

EP 0 449 836 B1

FIG. 7